# EUROPEAN PATENT SPECIFICATION

(11) **EP 0 876 729 B1**
(45) Date of publication and mention of the grant of the patent: **04.06.2003**
(21) Application number: 97940287.2
(22) Date of filing: 26.09.1997
(51) Int. Cl.: H04N 5/45, H04N 7/08

(54) **TELEVISION RECEIVER**
FERNSEHEMPFÄNGER
POSTE DE TELEVISION

(30) Priority: 29.10.1996 EP 96203006
(43) Date of publication of application: 11.11.1998
(73) Proprietor: Koninklijke Philips Electronics N.V., 5621 BA Eindhoven (NL)
(72) Inventor: VAN GESTEL, Henricus, Antonius, Wilhelmus, NL-5656 AA Eindhoven (NL)
(74) Representative: Schmitz, Herman Jan Renier
(86) International application number: IB9701168
(87) International publication number: WO98019456

(56) References cited:
- EP-A- 0 246 698
- US-A- 5 008 750
- US-A- 5 481 315

## Description

The invention relates to a television receiver, comprising: means for receiving a television signal representing a displayable video picture; a data decoder for receiving and decoding encoded data representing a displayable auxiliary picture, the encoded data including display control data defining an area of said auxiliary picture in which the video picture is to be displayed; display selection means for selecting the video picture or the auxiliary picture in response to said display control data; and control means connected to said receiving means, data decoder and display selection means, for controlling the operation of the receiver.

Such a television receiver may be a television apparatus with a display screen, but also a video recorder or a multimedia personal computer having an extension card for receiving television signals. The invention also relates to a method of controlling such a television receiver.

An example of a known television receiver as described in the opening paragraph is a television receiver in which the data decoder is a teletext decoder. Such a television receiver will hereinafter be referred to as teletext receiver. However, the invention is not restricted to teletext receivers. The data decoder may also be, for example, an on-screen-display circuit for generating on-screen-display control menus.

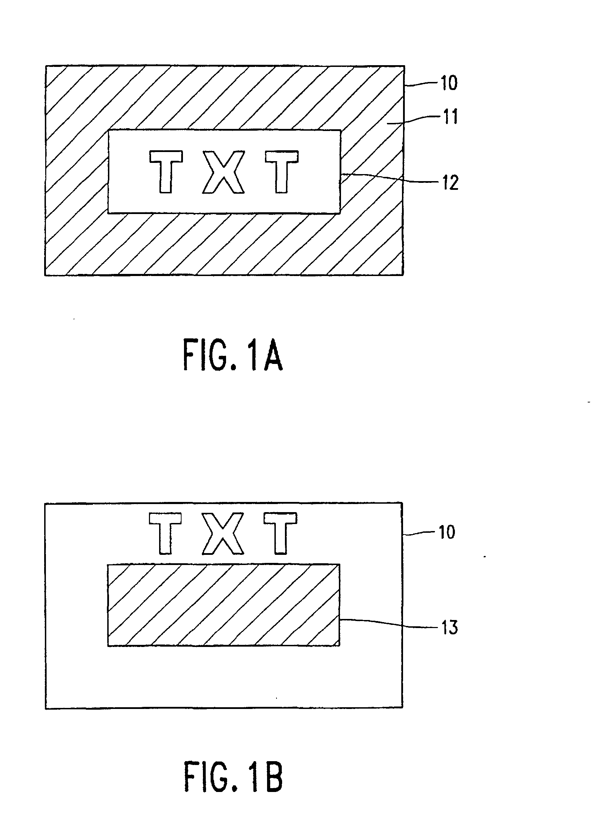

Teletext receivers have a teletext operation mode in which pages of information which are repeatedly transmitted as encoded data in the vertical blanking interval of the television signal can be selectively received, stored, decoded, and displayed. In general, the teletext pages occupy substantially the whole television screen, and the video picture is completely suppressed. One exception is a "newsflash" page. An example of such a page is shown in Fig. 1, in which a display screen **10** displays a video picture **11** and a box **12** showing the newsflash. Newsflash pages have been known since the introduction of teletext in the 70s. The present teletext standard, sometimes referred to as "level 2.5" teletext, also allows the feature of displaying video in a window of a full-screen teletext page. An example ef such a page is shown in Fig. 1B in which **13** denotes said window.

The teletext pages shown in Figs. 1A and 1B comprise display control data defining whether the auxiliary picture (the teletext page or on-screen-display menu) and the video picture are to be displayed simultaneously or not simultaneously. The display control data also defines the size and position of the box 12 or window 13, respectively.

It is an object of the invention to further improve the prior art television receiver.

In accordance with the invention, the television receiver is characterized in that the control means are adapted, in response to a user-operable command, to overrule said display control data and control the display selection means to suppress the video picture in said auxiliary picture area as set out in apparatus claim 1 and method claim 5. It is thereby achieved that the user has the option of instructing his receiver to display auxiliary pages without the disturbing video information.

The invention is based on the observation that many users find the textual part of display screens as shown in Figs. 1A and 1B difficult to read. This is because the majority of teletext pages transmitted by a broadcaster is of the "full-screen teletext" type, and the user is accustomed to reading pages of this type. The simultaneousl display of a video picture and a teletext page affects the legibility of the text and distracts the user's attention. This problem applies in particular to elderly people and will become more important in the future as the use of windows in level 2.5 teletext pages is expected to increase.

The user-operable command can be generated by a special key on a (remote) control device or through an on-screen displayed menu. In a preferred embodiment, the control circuit is adapted, in response to said user-operable command, to select at least a first display mode, in which the video picture in the auxiliary picture area is not suppressed, and a second display mode in which the video picture in the auxiliary picture area is suppressed. In such an embodiment, the user can toggle between the conventional display mode and a display mode without video picture. The user-operable command can also be combined with other, already available, display mode control commands such as the cancel/mixed mode toggle command (the cancel mode is a display mode in which display of a teletext page is suppressed until a requested page is received or an already consulted page is updated; the mixed mode is a display mode in which a full-screen teletext page and a full-screen video picture are displayed simultaneously).

Pressing the toggle key to select the display mode in which the video picture is suppressed has no observable effect if the auxiliary picture is a full-screen teletext page. This may cause the user to believe that the toggle key of the remote control device does not work properly. This confusion is avoided in an embodiment wherein the control circuit selects the second display mode only if the display control data prescribes the video picture to be displayed in said area of said auxiliary picture.

In another embodiment, the control means is connected to a non-volatile memory for storing the second display mode as an initial display mode. In such an embodiment, a user can program his receiver to suppress the video picture in auxiliary picture areas without pressing the relevant key whenever such an auxiliary picture is displayed.

These and other aspects of the invention are apparent from and will be elucidated with reference to the embodiments described hereinafter.
Figs. 1A and 1B, already discussed, show known examples of teletext pages including an area with a video picture.
Fig.2 shows diagrammatically a television receiver in accordance with the invention.
Fig.3 shows a flow chart of operations that are carried out by a control circuit which is shown in Fig.2.

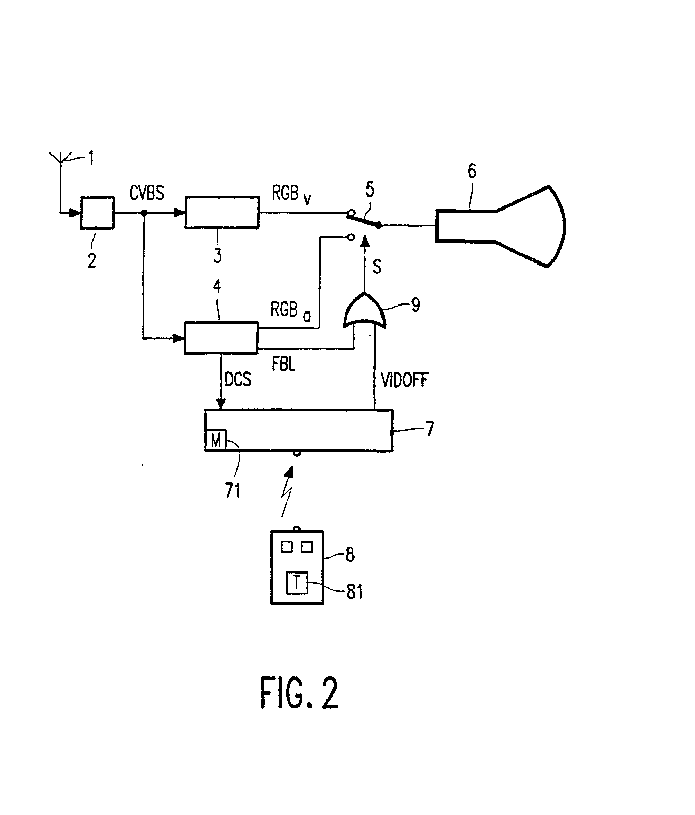

Fig.2 shows diagrammatically a television receiver in accordance with the invention. The television receiver comprises, in a generally known manner, an antenna input **1**, a tuner **2**, a video processing circuit **3**, a teletext data decoder and character generator **4**, a switch **5**, a display screen **6**, a control circuit **7**, and a remote control transmitter **8**. The tuner **2** applies a composite video, blanking and synchronization signal (CVBS) to the video processing circuit **3** which provides a video display signal RGBᵥ representing a video picture. The CVBS signal is also applied to teletext data decoder and character generator **4** (hereinafter teletext decoder for short) which is adapted to capture, decode and display a user-selected teletext page transmitted in the vertical blanking interval of a television signal. The teletext decoder **4** is also adapted to display locally generated on-screen-display messages such as control menus. An example of such a teletext decoder is the Philips integrated circuit SAA5240. The decoder provides an auxiliary display signal RGBₐ and a fast blanking signal FBL.

Further control connections between the various circuit elements of the television receiver are well-known and not shown in the Figure. For example, control circuit **7** controls tuner **2** to receive a selected channel, video processor **3** to adjust picture settings, and teletext decoder **4** to capture and display a requested teletext page or a locally stored on-screen-display page.

The video display signal RGBᵥ and the auxiliary display signal RGBₐ are applied to respective inputs of the switch **5** which selects one of the display signals for display. In the prior-art television receiver, the switch **5** is directly controlled by the fast blanking signal FBL. This fast blanking signal FBL is inactive in a video-only display mode and active in a teletext (TXT) or on-screen-display (OSD) operating mode. More particularly, the FBL signal is active during the periods of time when the auxiliary picture is to be displayed. That is, the signal is continuously active if a full-screen teletext page is being displayed, and it represents the box **12** or window **13** (see Figs. 1A and 1B) if TXT/OSD and video are simultaneously being displayed.

The television receiver shown in Fig.2 further comprises an OR-gate **9**, a first input of which receives the FBL signal and a second input receives a control signal VIDOFF (video off) from control circuit **7**. In the embodiment shown, the control circuit further receives a display control signal DCS from teletext decoder **4**. This signal informs the control circuit whether the currently displayed auxiliary page includes or does not include a box or window such as is shown in Figs. 1A and 1B. if the auxiliary page is a teletext page, the DCS signal represents the newsflash control bit which is accommodated in the page header of the teletext page. The signal DCS can also be generated by sensing the fast blanking signal FBL. If FBL includes signal transitions within the active video interval period, a box or window is assumed to be present.

The output of OR-gate **9** is a selection signal S which controls the state of switch **5**. It will be appreciated from Fig.2 that, if VIDOFF='0', the switch will be controlled by the fast blanking signal FBL in a conventional manner. If VIDOFF= '1', the video picture will be suppressed, regardless of the blanking signal FBL. It should be noted that OR-gate **9** is shown for the purpose of explaining the invention in functional terms. In practical embodiments of the invention, the OR-gate is preferably integrated in teletext decoder **4** and the signals DCS and VIDOFF are conveyed through an already existing inter-IC bus.

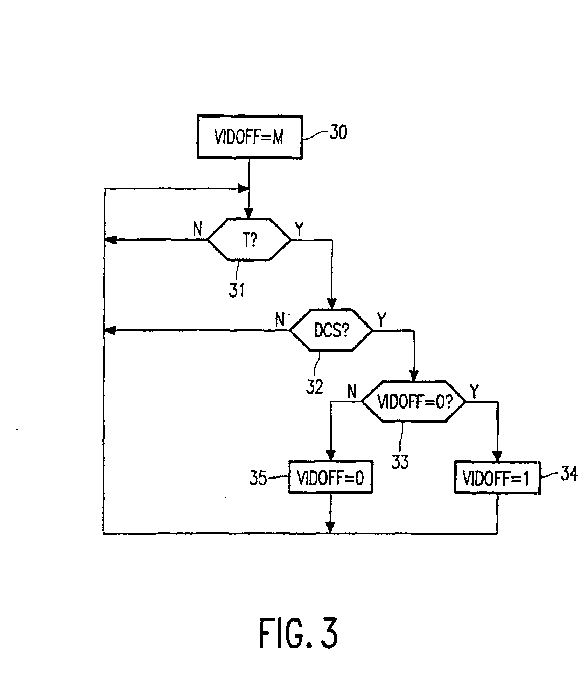

The operation of the receiver will further be described in terms of operations that are carried out by control circuit **7** in the TXT/OSD operation mode. Fig. 3 shows a flow chart of said operations. In a step **30**, an initial value is assigned to the signal VIDOFF. This initial value may be a fixed value, e.g. '0' in which case the default display mode of the receiver is the conventional display mode. In the embodiment shown in Fig.3, the initial value of the signal VIDOFF is read from a non-volatile memory location M (**71** in Fig. 2) of the control circuit. This memory location is user-programmable and allows the user to determine the default display mode of the television receiver.

In a step **31**, it is determined whether the user presses a toggle key T (**81** in Fig.2) of the remote control device. If the toggle key is pressed, the control circuit reads the display control signal DCS in a step **32** to determine whether the currently displayed picture is a full-screen TXT/OSD page or a picture having a box or window. In the latter case, the VIDOFF signal value is inverted. If VIDOFF='0', then the signal assumes the new value "1" (steps **33**,**34**). Through the OR-gate, this value overrides the FBL signal and the video picture will be suppressed (blanked) continuously. The user can now more easily read the TXT newsflash or OSD menu without being disturbed or distracted by the video picture. If VIDOFF='1', then the signal assumes the new value '0' (steps **33**,**35**). Now, the FBL signal controls the state of the video switch, and the conventional combined TXT/video or OSD/video picture as shown in Figs. 1A and 1B is being displayed. The toggle key T thus causes the receiver to toggle between the conventional display mode, in which video is displayed, and the display mode in which video is suppressed.

In the above-described embodiment, the control circuit toggles between the display modes only if the display control signal DCS prescribes video to be displayed in the auxiliary picture area. The step **32** is optional. It prohibits the display mode from being changed when the currently displayed picture is a full-screen TXT/OSD page, which would confuse the user because the new display mode will not be observable until a page with video area is being displayed.

The invention can be summarized as follows. The teletext standard allows broadcasters to transmit teletext information for display in an area of the video picture. Some people find the textual part of these "newsflash" pages difficult to read. This problem will deteriorate with the introduction of "level 2.5" teletext, which allows broadcasters to display video in a window of a teletext page. The invention alleviates the problem by enabling the user to suppress the video signal.

## Claims

1. A television receiver, comprising:
means (1,2,3) for receiving a television signal representing a displayable video picture;
a data decoder (4) for receiving and decoding encoded data representing a displayable auxiliary picture, the encoded data including display control data (DCD,FBL) defining an area of said auxiliary picture in which the video picture is to be displayed;
display selection means (5) for selecting the video picture or the auxiliary picture in response to said display control data (FBL); and
control means (7,8) connected to said receiving means, data decoder and display selection means, for controlling the operation of the receiver;
**characterized in that** the control means (7,8,9) are adapted, in response to a user-operable command (T), to overrule said display control data (FBL) and control the display selection means to suppress the video picture in said auxiliary picture area.

2. The television receiver as claimed in Claim 1, wherein the control circuit is adapted, in response to said user-operable command, to select at least a first display mode, in which the video picture in said auxiliary picture area is not suppressed, and a second display mode in which the video picture in said auxiliary picture area is suppressed.

3. The television receiver as claimed in Claim 2, wherein the control circuit selects the second display mode only if the display control data prescribes the video picture to be displayed in said area of said auxiliary picture.

4. The television receiver as claimed in Claim 2 or 3, wherein the control means is connected to a non-volatile memory (M) for storing the second display mode as an initial display mode.

5. A method of controlling a television receiver which is capable of:
receiving a television signal representing a displayable video picture;
receiving and decoding encoded data representing a displayable auxiliary picture, the encoded data including display control data defining an area of said auxiliary picture in which the video picture is to be displayed;
selecting the video picture or the auxiliary picture in response to said display control data;
**characterized by** overruling said display control data and suppressing the video picture in said auxiliary picture area in response to a user-operable command.

## Patentansprüche

1. Fernsehempfänger, der die nachfolgenden Elemente umfasst:
- Mittel (1, 2, 3) zum Empfangen eines Femsehsignals, das ein wiedergebbares Videobild darstellt,
- einen Datendecoder (4) zum Empfangen und Decodieren codierter Daten, die ein wiedergebbares Hilfsbild darstellen, wobei die codierten Daten Wiedergabesteuerdaten (DCD, FBL) enthalten, die ein Gebiet des genannten Hilfsbildes definieren, in dem das Videobild wiedergegeben werden soll,
- Wiedergabeselektionsmittel (5) zum Selektieren des Videobildes oder des Hilfsbildes in Reaktion auf die genannten Wiedergabesteuerdaten (FBL); und
- Steuermittel (7,8), die mit den genannten Empfangsmitteln, dem Datendecoder und den Wiedergabeselektionsmitteln verbunden sind, zur Steuerung der Wirkung des Empfängers, **dadurch gekennzeichnet, dass** die Steuermittel (7, 8, 9) dazu vorgesehen sind, um in Reaktion auf einen vom Benutzer ausgehenden Befehl (T) die genannten Wiedergabesteuerdaten (FBL) zu ignorieren und die Wiedergabeselektionsmittel derart anzusteuern, dass sie das Videobild in dem genannten Hilfsbildbereich austasten.

2. Fernsehempfänger nach Anspruch 1, wobei die Steuerschaltung dazu vorgesehen ist, um in Reaktion auf einen vom Benutzer ausgehenden Befehl wenigstens eine erste Wiedergabemode zu selektieren, in der das Videobild in dem genannten Hilfsbildbereich nicht ausgetastet wird und eine zweite Wiedergabemode zu selektieren, in der das Videobild in dem genannten Hilfsbildbereich unterdrückt wird.

3. Fernsehempfänger nach Anspruch 2, wobei die Steuerschaltung die zweite Wiedergabemode nur dann selektiert, wenn die Wiedergabesteuerdaten das in dem genannten Bereich des genannten Hilfsbildes wiederzugebende Videobild vorschreibt.

4. Fernsehempfänger nach Anspruch 2 oder 3, wobei die Steuermittel mit einem nicht flüchtigen Speicher (M) verbunden sind zur Speicherung der zweiten Wiedergabemode als Ausgangswiedergabemode.

5. Verfahren zur Steuerung eines Fernsehempfängers, der zu den nachfolgenden Vorgängen imstande ist:
- das Empfangen eines Femsehsignals, das ein wiedergebbares Videobild darstellt,.
- das Empfangen und Decodieren codierter Daten, die ein wiedergebbares Hilfsbild darstellen, wobei die codierten Daten Wiedergabesteuerdaten enthalten, die ein Gebiet des genannten Hilfsbildes definieren, in dem das Videobild wiedergegeben werden soll,
- das Selektieren des Videobildes oder des Hilfsbildes in Reaktion auf die genannten Wiedergabesteuerdaten, **gekennzeichnet durch** Ignorierung der genannten Wiedergabesteuer-Daten und **durch** Austastung des Videobildes in dem genannten Hilfsbildgebiet in Reaktion auf einen Befehl vom Benutzer.

## Revendications

1. Récepteur de télévision comprenant:
des moyens (1, 2, 3) pour recevoir un signal de télévision représentant une image vidéo affichable;
un décodeur de données (4) pour recevoir et pour décoder des données codées représentant une image auxiliaire affichable, les données codées comprenant des données de commande d'affichage (DCD, FBL) qui définissent une zone de ladite image auxiliaire dans laquelle doit être visualisée l'image vidéo;
des moyens de sélection d'affichage (5) pour sélectionner l'image vidéo de l'image auxiliaire en réaction auxdites données de commande d'affichage (FBL); et
des moyens de commande (7, 8) qui sont connectés auxdits moyens de réception, audit décodeur de données et auxdits moyens de sélection d'affichage pour commander le fonctionnement du récepteur;
**caractérisé en ce que** les moyens de commande (7, 8, 9) sont adaptés, en réaction à une commande praticable par l'utilisateur (T), à annuler lesdites données de commande d'affichage (FBL) et à commander les moyens de sélection d'affichage pour supprimer l'image vidéo dans ladite zone d'image auxiliaire.

2. Récepteur de télévision selon la revendication 1, dans lequel le circuit de commande est adapté, en réaction à ladite commande praticable par l'utilisateur, à sélectionner au moins un premier mode d'affichage dans lequel l'image vidéo dans ladite zone d'image auxiliaire n'est pas supprimée, et un deuxième mode d'affichage dans lequel est supprimée l'image vidéo dans ladite zone d'image auxiliaire.

3. Récepteur de télévision selon la revendication 2, dans lequel le circuit de commande sélectionne le deuxième mode d'affichage seulement si les données de commande d'affichage prescrivent l'image vidéo à visualiser dans ladite zone de ladite image auxiliaire.

4. Récepteur de télévision selon la revendication 2 ou 3, dans lequel les moyens de commande sont connectés à une mémoire non volatile (M) pour mémoriser le deuxième mode d'affichage comme un mode d'affichage initial.

5. Procédé pour commander un récepteur de télévision qui est capable de:
recevoir un signal de télévision représentant une image vidéo affichable;
recevoir et de décoder des données codées représentant une image auxiliaire affichable, les données codées comprenant des données de commande d'affichage qui définissent une zone de ladite image auxiliaire dans laquelle doit être visualisée l'image vidéo;
sélectionner l'image vidéo ou l'image auxiliaire en réaction auxdites données de commande d'affichage;
**caractérisé par** l'annulation desdites données de commande d'affichage et par la suppression de l'image vidéo dans ladite zone d'image auxiliaire en réaction à une commande praticable par l'utilisateur.
